# EUROPEAN PATENT APPLICATION

(11) **EP 4 345 785 A1**
(43) Date of publication of application: **03.04.2024**
(21) Application number: 22199127.6
(22) Date of filing: 30.09.2022
(51) Int. Cl.: G08B 13/19, G06N 3/0464, G06N 3/09, G08B 29/18

(54) **MACHINE LEARNING FOR THERMAL DETECTORS**

(71) Applicant: Verisure Sàrl, 1290 Versoix (CH)
(72) Inventor: OLSSON, Sofie, 21119 Malmö (SE); IVANOV, Arseni, 211 19 Malmö (SE)
(74) Representative: Prinz & Partner mbB

(57) **Abstract**

Provided is a method in a security monitoring system to secure at least part of a perimeter of a premises (100). The method classifies (312) input data by a machine-learning model comprising a convolutional neural network (CNN) to produce a classification result, and generates (314) output data based at least in part on the classification result. The input data is based at least in part on a time-dependent infrared signal measured by a presence and/or movement detector (114, 216). The classification result indicates a correspondence of the input data with a security-relevant event. The output data indicates whether a security-relevant event was detected.

## Description

### TECHNICAL FIELD

The present invention relates to security installations to secure at least part of a perimeter of premises and to monitor premises, in particular using machine-learning techniques applied to thermal sensor data, and to methods performed by the system and by controllers of the system. More particularly, the present invention relates to the field of infrared detectors for security systems, especially intrusion alarms, and/or video doorbells.

### BACKGROUND

Security installations that are or include security monitoring systems for monitoring premises, often referred to as alarm systems, typically provide a means for detecting the presence and/or actions of people at the premises and reacting to detected events. Commonly such systems include sensors to detect the opening and closing of doors and windows to provide a secure perimeter to the premises, creating one or more protected interior spaces, movement detectors to monitor spaces (both within and outside buildings) for signs of movement, microphones to detect sounds such as breaking glass, and image sensors to capture still or moving images of monitored zones. Such systems may be self-contained, with alarm indicators such as sirens and flashing lights that may be activated in the event of an alarm condition being detected. Such installations typically include a control unit (which may also be termed a central unit), generally mains powered, that is coupled to the sensors, detectors, cameras, etc. ("nodes"), and which processes received notifications and determines a response. The central unit may be linked to the various nodes by wires, but increasingly is instead linked wirelessly, rather than by wires, since this facilitates installation and may also provide some safeguards against sensors/detectors effectively being disabled by disconnecting them from the central unit. Similarly, for ease of installation and to improve security, the nodes of such systems typically include an autonomous power source, such as a battery power supply, rather than being mains powered.

As an alternative to self-contained systems, a security monitoring system may include an installation at a premise, domestic or commercial, that is linked to a remote Central Monitoring Station (CMS) where, typically, human operators manage the responses required by different alarm and notification types. In such centrally monitored systems, the central unit at the premises installation typically processes notifications received from the nodes in the installation and notifies the Central Monitoring Station of only some of these, depending upon the settings of the system and the nature of the detected events. In such a configuration, the central unit at the installation is effectively acting as a gateway between the nodes and the Central Monitoring Station. Again, in such installations the central unit may be linked by wires, or wirelessly, to the various nodes of the installation, and these nodes will typically be battery rather than mains powered.

Such security monitoring systems contribute to the safety and wellbeing of occupants of the protected premises, as well as safeguarding articles within the protected perimeter - which may of course not simply be limited to a house or dwelling but may also extend to the grounds of the house, protected by a boundary fence and gate, for example.

Presence and/or movement detectors for use in such security monitoring systems may include a passive infrared (PIR) sensor for detecting motion of a "hot" object between zones that map thermal radiation from the object onto the sensing surface of the PIR sensor. This produces a time-dependent analog signal, with a series of analog pulses as the object moves amongst zones. Optics (e.g., Fresnel lens) may be arranged in front of the PIR sensor to map zones into overlapping sensed areas, so that multiple zones map into the same sensed area of the sensor.

PIR sensors of the type described above are inexpensive and capable of detecting even relatively modest movement. A downside of using such sensors is that the analog signal is typically not "image-like" or "pixel-like" in the same way as a two-dimensional image sensor as used to capture an image in a camera. Also, while it is possible to detect motion reliably, it is generally not possible to deduce from the analog signal itself a type of object being sensed, in particular not whether the moving object is a person or an animal, such as a domestic pet that should not trigger a home alarm. There is no known universal correlation between humans and animals.

One conventional way of trying to discriminate between a person and an animal is to vary the signal threshold that triggers what is considered to be "detected motion". However, this can effectively reduce the sensitivity of the PIR sensor, and so reduce the detection range.

Another commonly used approach is to use optics that defocus or blank infrared radiation coming from floor level (where animals and other animals are), so that the PIR sensor receives less thermal radiation from floor-level than from higher up (corresponding to human height). This makes the PIR sensor more sensitive to taller objects that move, and less sensitive to smaller objects moving at floor level. The signal from the PIR sensor therefore contains less floor-level content.

A particular problem with the above techniques is that they essentially "dumb-down" the PIR sensor. The device does not actually discriminate between different detections but is merely made less sensitive to the point of not detecting them, which of course increases the likelihood of also failing to detect intruders in many cases. In particular, the device may not be effective to detect an intruder who decides to crawl on the floor like a dog or slide on his belly on the floor (so-called "belly crawler"). Being able to defeat or trick a conventional PIR detector so easily is undesirable and remains a significant technical problem.

Therefore, there is currently only a choice of either having a sensitive detector that is likely to trigger false detections due to passage of pets or other animals (thereby producing a greater number of "false positives"), or an insensitive detector that is less likely to be triggered by animals but also less likely to detect actual intruders (thereby producing a greater number of "false negatives"). If more information is required from a monitored area, the conventional approach is to use a more expensive sensor that can generate a pixelated image for image processing. However, such sensors are more expensive and typically consume more power, making long-life battery-operation less practical.

Embodiments of the present invention seek to provide enhanced security monitoring systems, and corresponding apps, methods and other implementations that improve the scope of security monitoring systems to address aspects of the problem of more reliably detecting security-relevant events, in particular by reducing the likelihood of false positives and/or false negatives, as well as providing new functionality and methods.

### SUMMARY OF THE INVENTION

According to a first aspect, there is provided a method in a security monitoring system. The method may serve to secure at least part of a perimeter of a premises. The method may be a control method for controlling the system. The method may comprise the step of classifying input data by a machine-learning model to produce a classification result. The method may comprise the step of generating output data based at least in part on the classification result.

Accordingly, aspects of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For the machine-learning model to analyze the content of the input data, the machine-learning model may be trained using training data as input and training content information as output. By training the machine-learning model with many training data and associated training content information (e.g., labels or annotations), the machine-learning model "learns" to recognize the content of the input data, so the content of input data that was not included in the training data can be recognized using the machine-learning model.

The input data may be based at least in part on a time-dependent thermal and/or infrared signal measured by a presence and/or movement detector. The thermal and/or infrared signal may be any signal, in particular any analog signal, which carries information about an amount of measured heat and/or measured temperature. In particular, the signal may be an infrared signal, and references hereinafter to a thermal signal are specifically envisaged to include infrared, as well as other types of thermal signals.

The thermal signal being "time-dependent" means that the signal comprises more than one discrete measurement. Rather, the time-dependent thermal signal may comprise a sequence of measurements which are ordered by time. The sequence may be a continuous sequence of measurements. In that sense, the time-dependent thermal signal may be conceptualized as a time-domain graph of the signal. In other words, the time-dependent thermal signal represents a fluctuation of the signal strength over time.

By training a machine-learning model using training sensor data and a desired output, the machine-learning model "learns" a transformation between the sensor data and the output, which can be used to provide an output based on non-training sensor data provided to the machine-learning model. The provided data (e.g., sensor data, metadata and/or image data) may be preprocessed to obtain a feature vector, which is used as input to the machine-learning model.

The classification result may indicate a correspondence of the input data with a security-relevant event. The output data may indicate whether a security-relevant event was detected. Accordingly, the method eventually determines whether the measured time-dependent thermal signal is such that a security-related event should be triggered.

In contrast to the conventional approaches, a new idea underlying the above-described aspect is to apply machine learning to a thermal signal, e.g., to the signal from an infra-red sensor. This has the surprising result that, even though the signal from a simple thermal sensor is not considered to contain information understandable to identify a security-relevant event, let alone to distinguish between humans and animals (and especially humans behaving like animals), a machine learning algorithm can produce surprisingly accurate discrimination. Put differently, by using machine-learning, the sensitivity of the detection may be improved while at the same time reducing the occurrence of false detection events generated by animals (or other noisy conditions).

Before the invention has been devised, it was counter-intuitive to apply machine learning in this manner and for this purpose because it was not accepted that a thermal signal, such as a PIR output signal, is even capable of yielding sufficient information to produce meaningful, let alone reliable, results. This is not just a situation of using machine learning to do more efficiently some processing that can be done by other techniques. It is rather using machine learning in a new way to process signals that are counter-intuitive to use to yield such results.

In a particularly preferred implementation, the machine-learning model comprises, or is, a convolutional neural network (CNN). In deep learning, a CNN is a class of artificial neural network (ANN) which is most commonly applied to analyze visual imagery. As such, CNNs are typically considered very "data-hungry" because images typically carry a vast amount of information to be processed. Therefore, it is even more counter-intuitive to use a CNN to analyze a thermal signal, and it is even more surprising that this yields reliable results.

However, the concepts disclosed herein may also be implemented with other machine-learning techniques. In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g., be used to store, manipulate or apply the knowledge.

Machine-learning algorithms are usually based on a machine-learning model. In other words, the term "machine-learning algorithm" may denote a set of instructions that may be used to create, train, or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e., to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph.

Alternatively, the machine-learning model may be based on a genetic algorithm, which is a search algorithm and heuristic technique that mimics the process of natural selection.

In another aspect, the method may comprise the step of sampling the time-dependent thermal signal to produce a sequence of data values, in particular from an analog signal. The input data comprises the sequence of data values. Accordingly, while the sensor and/or detector itself may produce data which is not directly usable by the machine-learning model, e.g., an analog or continuous signal, the signal is in this aspect sampled to produce a digital representation thereof which can then be fed into the machine-learning model.

The sampling step may be performed for a predetermined sampling duration and/or with a predetermined sampling rate. Conceptually speaking, the sampling duration determines the length of the x-axis when the time-dependent thermal signal is conceptualized as a time-domain graph, and the sampling rate determines the distance in time between sampled points of the continuous signal curve.

The inventors have found that setting the sampling duration to approximately 10 seconds and/or setting the sampling rate to approximately 50 Hz is particularly beneficial because this allows to collect enough signal measurements to produce meaningful evaluations results and at the same time keeps the size of the measured data reasonable.

However, different settings may be used depending on the circumstances. For example, the sampling duration may be selected from the range of 1 to 19 seconds, from the range of 2 to 18 seconds, from the range of 3 to 17 seconds, from the range of 4 to 16 seconds, from the range of 5 to 15 seconds, from the range of 6 to 14 seconds, from the range of 7 to 13 seconds, from the range of 8 to 12 seconds or from the range of 9 to 11 seconds. Also sampling durations of 20 or more seconds may be used. The sampling rate may be selected from the range of 10 to 90 Hz, from the range of 20 to 80 Hz, from the range of 30 to 70 Hz, or from the range of 40 to 60 Hz. The sampling rate may also be set to 100 Hz or any value greater than 100 Hz, such as 200 Hz.

In another aspect, the data values may be one-dimensional data values and each data value may indicate a signal strength of the time-dependent thermal signal at a sampling point. Accordingly, this produces a particularly simple type of input data for the machine-learning model. In other aspects, also multi-dimensional data values may be used to provide more feature-rich inputs to the machine-learning model, depending on the capabilities of the used sensor, in particular whether the sensor is configured for producing a multi-channel signal. In that sense, the input data may comprise data representing: (i) a single channel of infrared signal data; or (ii) multiple channels of infrared signal data, optionally two channels.

In another aspect, during the step of classifying, the machine-learning model may consider at least in part one or more characteristics. One example characteristic is a signal strength of the thermal signal. If the signal strength is high or very high, this indicates that a lot of energy was radiated into the sensor, which in turn indicates a high likelihood that a human was walking close-by. Another example characteristic is a smoothness of the thermal signal. If the signal fluctuates rather smooth, this indicates a high likelihood that a humas was walking by, instead of e.g. a moving curtain (which would produce a more noisy or jagged signal fluctuation). Further example characteristics include, without limitation, a number of peaks of the thermal signal, and a regularity of peaks of the thermal signal.

In another aspect, the classification result may indicate a probability that the input data corresponds to a security-relevant event. The probability may be denoted as a real number from the interval between 0 and 1. Accordingly, the machine-learning model is able to output a very fine-grained likelihood with which the input data corresponds to a security-relevant event.

In another aspect, the output data may comprise, or consist of, a binary signal, thereby indicating whether a security-relevant event was detected or not. The value of the binary signal may depend on whether the probability reaches or exceeds a sensitivity threshold. Accordingly, the classification in this aspect effectively comprises two classes, namely "security-relevant event" and "no security-relevant event", making the machine-learning model behave like a binary classifier. However, in other aspects, more than two classes may be provided, as the circumstances may require.

The inventors have found that a sensitivity threshold of approximately 60 % may be particularly preferred. However, the sensitivity threshold may be selected as required by the circumstances. For example, the sensitivity threshold may be at least approximately 50 %, at least approximately 55 %, at least approximately 65 %, at least approximately 70 %, at least approximately 75 %, at least approximately 80 %, at least approximately 85 %, at least approximately 90 %, at least approximately 95 %, at least approximately 100%, or any other suitable value in-between.

In another aspect, the machine-learning model may be trained, in particular until its inference results, i.e., its classification results, have a desired accuracy.

In particular, the machine-learning model may be trained to consider the presence of a human in the detection range of the presence and/or movement detector to be a security-relevant event and to consider the presence of a non-human, in particular an animal, in the detection range of the presence and/or movement detector not to be a security-relevant event.

Furthermore, the machine-learning model may be trained using training data comprising a plurality of measurements of the time-dependent thermal signal, or samples thereof, and associated labels which indicate whether the respective measurement or sample is associated with a security-relevant event. Accordingly, this example uses a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training.

However, other training techniques may be used. For example, apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm. Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are.

Apart from supervised or semi-supervised learning, unsupervised learning may be used to train the machine-learning model. In unsupervised learning, (only) input data might be supplied, and an unsupervised learning algorithm may be used to find structure in the input data (e.g., by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is yet another group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In another aspect, the plurality of measurements of the time-dependent thermal signal, or the samples thereof, included in the training data have been recorded when one of the following objects was present in the detection range of a presence and/or movement detector: a walking human, a crawling human, a belly-crawling human, a robot vacuum cleaner or other automatic household appliance, a curtain or other movable furniture, sunlight, white light, shock, and/or an animal, in particular a pet. Compiling a training dataset from these types of objects ensures that the machine-learning model is trained in a balanced manner and does not create any bias, excessive preference, or even blindness towards a particular type of object.

The occurrences of the above-mentioned types of objects may be evenly distributed in the training dataset. Alternatively, another type of distribution may be selected based on the circumstances. For example, when training data is generated in a laboratory setting or otherwise controlled setting, some events may still be easier to collect than others. For instance, human motion is easy while specific pet scenarios are more difficult to collect because not all pets are willing to do what the instructor wants. Even more difficult scenarios to generate are sun reflections on the floor and/or mirrors, or steam flow from appliances such as a dish washer or coffee machine. However, the distribution between the classes "security-relevant event" and "no security-relevant event" mentioned further above may be about equal.

In one example, training data recorded in 30 locations were used to train the machine-learning model.

In another aspect, the machine-learning model may be a first machine-learning model associated with a first operational mode and the system may comprise a second machine-learning model, in particular a second CNN, associated with a second operational mode. The first and second machine-learning models may have been trained on different sets of training data and/or have different hyperparameters, examples of which will be provided in the detailed description further below. The system may comprise means for receiving a user-selection indicating an operating mode of the system.

The first operating mode may be a default mode and the second operating mode may be a pet-friendly mode. Accordingly, it is possible that the system can react slightly differently in environments where pets are expected as compared to environments where no pets are expected. The two machine-learning models may be incorporated into a single device and the user may be enabled to switch between the default mode and the pet-friendly mode, e.g., by operating a button, a switch or other user interface element.

However, different sets of modes may be envisaged, and correspondingly trained machine-learning models may be provided. For example, another operational mode may be provided for a residential setting, where the conditions are generally stable or "less noisy", e.g., the temperature is generally well regulated and the only animals likely to pass are pets. Yet another operational model may be provided for a business setting, where the conditions are generally less stable or more "noisy". The temperature may be generally less well-regulated with greater excursion (e.g., at night, heating may be turned off, and so ambient temperature may drop), the premises may have suspended signs that can move slightly in air currents and risk triggering detected motion, business premises may have larger windows that allow more sunlight into the interior during the day, and business premises may have unwelcome animals, such as rats, that could trigger detection.

In another aspect, the presence and/or movement detector may be or may comprise at least one infrared sensor, especially a low-power infrared sensor. For example, the sensor may be a sensor configured for consuming less than 1 mW, optionally less than 0.5 mW, optionally less than 0.1 mW, optionally less than 0.05 mW (applies to TMOS (see below) at about 0.04 mW), optionally less than 0.03 mW, optionally less than 0.02 mW, and optionally less than 0.01 mW (applies to PIR (see below) at about 0.005 mW).

Optionally, the infrared sensor may comprise or may be one or more of: a passive sensor, a passive infrared (PIR) sensor, or a thermal-MOS (TMOS) sensor.

Accordingly, the infrared sensor may be a passive infrared (PIR) sensor. Various types of PIR sensors may be used, e.g., a single PIR sensor, a PIR sensor with multiple infrared sensing areas, the outputs of which are summed to generate an aggregate output signal (even though the signals are aggregated, the sensor can still provide more variation in signal output than a single PIR element) and/or a multi-channel (e.g., 2-channel) PIR in which elements are interdigitated to provide two independent, offset, output signals.

Alternatively, the infrared sensor may be a thermal-MOS (TMOS) sensor. A TMOS sensor may detect stationary and moving thermal objects. A TMOS sensor may produce a slightly different signal compared to a PIR sensor, but they are similar in that they both produce time-dependent (optionally analog) signals, and neither is image-like. Machine-learning can be used to discriminate between different conditions even though the signals are not currently understood to be capable of yielding such information.

In another aspect, whereas a conventional approach would be to use optics that defocus thermal imaging from floor level in a conventional sensor, aspects of the invention, in particular the operation of the machine-language model, may be further improved by using optics that do not substantially defocus floor-level signals. This provides a more feature-rich signal for the machine-learning model, even though for a human the signal looks even less comprehensible and chaotic. The machine-learning model may also be used with a "floor-level defocusing" type of lens to improve performance compared to the prior art, but enhanced results may be expected by not defocusing floor-level signals.

In another aspect, as already explained above, if the output from the machine-learning model indicates that the detected object could be an "object of interest" (e.g., probably a human, whether standing up, or crawling, or sliding on his/her belly, and probably not an animal), it may be determined that a security-relevant event has occurred.

In another aspect, the output data may comprise, or may be the basis for, a control signal. This enables a variety of downstream uses of the output signal and eventually the classification determined by the machine-learning model.

Generally speaking, the control signal may be configured for controlling a technical system, device and/or process. For example, the control signal may be configured for waking a functional module from a dormant or sleep mode.

As another example, the control signal may be configured for activating a security device, in particular a range detector and/or a camera and/or a microphone, of the security monitoring system. This way, the detection event can be used to wake up additional sensors on the device, for example, a microphone and/or an image sensor (e.g., camera), to obtain further information. The further information may be transmitted to a surveillance station (e.g., a homeowner or an alarm monitoring center that handles alarms). Such additional sensors, such as microphone and camera, are generally power hungry, and so they are only activated when needed. The same may apply to the communication circuitry for transmitting information (e.g., a detection event, and audio and image/video signals) off the device.

As another example, the control signal may be configured for causing an alarm device to issue an alarm. Accordingly, the output data may immediately trigger an alarm.

As another example, the control signal may be configured for causing a display device to display the classification result. Accordingly, such a type of control signal represents functional data that can be visually observed by, e.g., security staff, which can then initiate appropriate actions.

In another aspect, the machine-learning model may be implemented on a processing circuitry, wherein a default operating mode of the processing circuitry is a power-saving mode. The method may comprise the further steps of monitoring the time-dependent thermal signal, preferably continuously while it is measured by the presence and/or movement detector, and transitioning the processing circuitry into an active mode in response to the monitoring. This way, the sampling step and/or the classifying step may be performed only when the processing circuitry is in the active mode.

Accordingly, in the above aspect, the processing circuitry hosting the machine-learning model may be arranged in the presence and/or movement detector, so that the interpretation of the signal may be carried out on the detector device itself by suitable processing circuitry. However, devices are often battery powered. To reduce power consumption, the processing circuitry may normally be in a dormant state, and only be activated when a signal from the infrared sensor exceeds an "interest" threshold that activates, or powers-up, the processing circuitry.

Alternatively, the processing circuitry hosting the machine-learning model may be arranged in a controller of the security monitoring system, or in a computing resource remote from the security monitoring system, in particular in a cloud computing environment. Such alternative off-device processing may involve transmitting the output signal from the detector to another device to be processed and interpreted. This can be accomplished by way of wireless connections to avoid having to hard-wire the detectors.

Regardless of in which device the machine-learning model is incorporated, the device may be a "peripheral" of the security system. It may be incorporated in a device that also includes a camera, e.g., a video doorbell or a security camera.

In another aspect, the method may comprise the step of collecting additional data, in particular a photo, a video and/or audio data. This step is optionally performed in response to the transitioning step recited further above (i.e., the transition from the sleep-mode to the active mode) and/or in parallel to the sampling step recited further above. Since a particular timespan is needed to feed the machine-learning model, which timespan largely depends on the sampling duration explained further above, also a quicker, essentially real-time, analysis of the signal may be desired. For example, a photo may be taken to evaluate the situation.

Additionally or alternatively, rules-based processing distinct from the machine-learning model may be applied, optionally in real-time and/or in parallel with the machine-learning model. The rules-based processing may, for example, be faster in certain clear-cut situations where the signal is such that a probability of a detection having been caused by a human is very high. In such clear-cut situations, the rules-based processing may yield a detection result before the timespan for feeding the machine-learning model. Rules-based processing may, for example, be based on one or more of: a number of pulses in the thermal signal, for example at least two pulses; a frequency of pulses in the thermal signal; a magnitude of signal value variation in the thermal signal, for example, of pulse amplitude.

In another aspect, the method may comprise the step of triggering an alarm device to issue an alarm. This step is preferably performed in response to the transitioning step recited further above (i.e., the transition from the sleep-mode to the active mode) and/or in parallel to the sampling step recited further above, and therefore enables a particularly early alarm. This "early alarm" feature may be triggered if the signal is very high (the threshold may depend on the operational mode; the pet-friendly mode may require a higher threshold) and/or additional requirements, e.g., whether the signal has made a predetermined number of pulses, such as two pulses or at least two pulses.

Also provided is a security monitoring system comprising means for carrying out any of the methods disclosed herein. Also provided is a presence and/or movement detector comprising means for carrying out any of the methods disclosed herein. Also provided is a data processing apparatus for a security monitoring system comprising means for carrying out any of the methods disclosed herein.

Also provided is a computer program, or a computer-readable medium having a computer program stored thereon. The computer program comprises instructions which, when the program is executed by a computer, cause the computer to carry out any of the methods disclosed herein.

Also provided is a dataset usable for training, validating and/or testing a machine-learning model such that the machine-learning model is usable in any of the methods disclosed herein.

Also provided is a data structure embodying a machine-learning model for use in any of the methods disclosed herein.

### DESCRIPTION OF FIGURES

Embodiments of the invention will now be described, by way of example only, with reference to the accompanying drawings, in which:
Figure 1 is a schematic drawing showing a front elevation of stylized building with an external space which is monitored by a security monitoring system according to an embodiment of the invention;
Figure 2 is a schematic part plan view of premises protected by a security monitoring system, together with other elements of the system;
Figure 3 is a flowchart of a method according to embodiments of the invention;
Figure 4 is an overview of hyperparameters of two preferred implementations (labelled "Version 1" and "Version 2") of a machine-learning model usable in embodiments of the invention;
Figure 5 shows schematically an architecture including a security monitoring system, a video entry arrangement, and an electrically controlled lock;
Figure 6 is a schematic block diagram of a video entry arrangement;
Figure 7A is an illustration of a time-dependent signal from a PIR sensor;
Figure 7B is an illustration of a time-dependent signal from a TMOS sensor;
Figure 8 is an overview of training datasets used for training the two preferred implementations of Figure 4.
Figure 9 is an overview of exemplary test results of a practical implementation of the concepts of embodiments of the invention.

### SPECIFIC DESCRIPTION

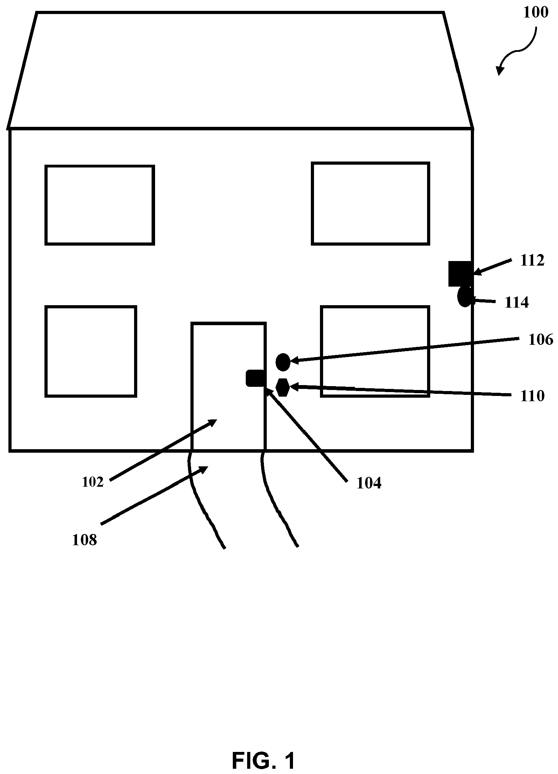

Figure 1 shows a view of the front of a premises 100 protected by a security monitoring system according to an aspect of the present invention. The premises, here in the form of a house, have an exterior door, here front door, 102. The door gives access to a protected interior space. The security monitoring system secures at least part of a perimeter to the premises 100, and the door constitutes an exterior closure 102 in the secure perimeter giving access to a protected interior space 200 of the premises. A lock 104 on the exterior door is optionally electrically controlled so that it can be locked and unlocked remotely.

To the side of the door, on the façade of the house, is a first video camera in the form of a video doorbell 106 which looks out from the façade of the premises so that anyone approaching the door along the path 108 can be seen, and in particular when a visitor stands at the door their face should clearly be visible. The video doorbell includes an actuator, e.g., a push button, for a visitor to indicate their presence at the closure. The video doorbell also includes an audio interface to enable bidirectional audio communication with a visitor at the closure 102.

As is conventional, the video doorbell preferably includes an infrared light source to illuminate whatever is in front of the video doorbell. Optionally, as shown, the façade of the house also carries an external keypad 110 by means of which a user can disarm the security monitoring system and unlock the lock 104. Also shown is an optional second video camera 112 which is coupled to a presence and/or movement detector 114. The detector may optionally be a thermal detector, for example a PIR sensor, also commonly referred to as pyroelectric infrared sensor or passive infrared sensor. The second video camera 112 may be arranged when the security monitoring system is armed, to capture video of the front of the house and the private area, e.g., the garden, in front of the house and signal an alarm event to a controller of the security monitoring system. As with the doorbell camera, the second video camera is preferably provided with an audio interface to enable bidirectional audio communication with anyone observed by the second video camera. Although the first video camera is illustrated in the form of a video doorbell, the first video camera may additionally or alternatively have the features described above for the second video camera, whether or not plural video cameras are used.

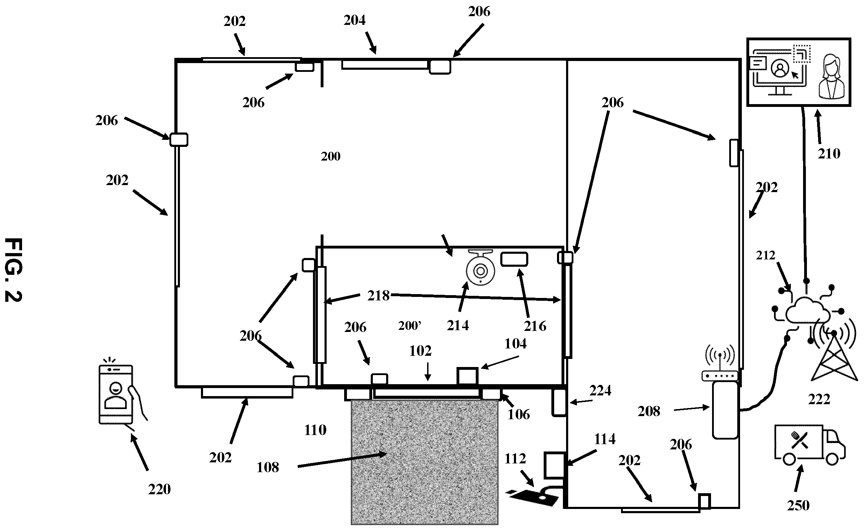

Figure 2 is a schematic part plan view of a premises 100 protected by security monitoring system according to an aspect of the invention, together with other elements of the system, corresponding generally to the premises of figure 1. The front door 102, with electrically controlled lock 104, leads into the protected interior space 200 of the premises. Each of the windows 202, and the rear door 204 is fitted with a sensor 206 to detect when they are opened. Each of the sensors 206 includes a radio transceiver to report events to a controller, or central unit, 208 of the security monitoring system. If one of the sensors 206 is triggered when the system is armed, a signal is sent to the central unit 208 which in turn may signal an alarm event to a remote central monitoring station 210. The central unit 208 is connected to the remote central monitoring station 210 via the Internet 212, either via a wired or a wireless connection. Also wirelessly coupled to the central unit 208 are the video doorbell 106, the electrically controlled lock 104, and if present the second video camera 112, its associated presence and/or movement detector 114 (although the latter may be integral with the second video camera 112) and the audio interface 116. These items, and the sensors 206, are preferably coupled to the central unit 208 using transceivers operating in the industrial scientific and medical (ISM) bandwidths, for example a sub-gigahertz bandwidth such as 868 MHz, and the communications are encrypted preferably using shared secret keys. The security monitoring system may also include other sensors within the protected interior space, such as an interior video camera 214 and associated movement detector 216 (which again may be integral with the camera 214), and each of the interior doors 218 may also be provided with a sensor 206 to detect the opening/closing of the door. Also shown in figure 2 are a user device 220, preferably loaded with an appropriate app - as will be described later, and a public land mobile network (PLMN) by means of which the central monitoring station 210, and the central unit 208, may communicate with the user device 220.

Operation of the security monitoring system may be controlled by one or more of: the controller 208, the remote monitoring station 210, and a security monitoring app installed on the user device 220. For example, the remote monitoring station 210, if provided, may receive one or more signals from any of the first camera and/or video doorbell 106, the second camera 112, the keypad 110, the sensors 206 and/or 520 (described in more detail later). The remote monitoring station 210 may transmit commands for controlling any one or more of: the arm state of the alarm system (e.g. armed or unarmed); commanding a tripped alarm state to be signaled by the alarm system (e.g. by triggering one or more sirens to generate alarm noise); commanding a lock state of the door lock 104 (e.g. locked or unlocked), commanding operation of one or more functions of the video doorbell 106, commanding operation of one or more cameras to transmit images to the remote monitoring unit. Communication with the remote monitoring station 210 may pass through the controller 208, as described above. In other embodiments without the remote monitoring station 210 or should communication with the remote monitoring station 210 be interrupted, operation of the alarm system may be controlled by the controller 208. In yet other embodiments, the controller 208 may be omitted, and the individual peripheral devices may communicate directly with the remote monitoring station 210.

The security monitoring system app is installed on a user device 220, here shown as a smartphone, although of course it could be almost any kind of electronic device, such as a laptop or desktop computer, a tablet such as an iPad, a smart watch, or even a television.

The security monitoring system may further comprise an audio interface to enable audio communication with a visitor at the closure, the controller 208 being configured to enable the remote monitoring center 210 to use the audio interface to speak to the visitor.

The security monitoring system preferably further comprises a first video camera arranged to observe a space in front of the exterior of the closure, the controller 208 being configured to enable the remote monitoring center 210 to use the first video camera to observe the visitor.

Conveniently, the first video camera may be a video doorbell, which is convenient both in terms of the location of the camera, and the co-location of the video and audio interfaces, along with the actuator, and in terms of the visual performance of the camera - as video doorbells are typically very well placed to capture images of people at the door. Conveniently, the video doorbell includes the audio interface, as this is likely to be well located from the point of view of performance, and it may also reduce installation complexity and time.

Preferably, the security monitoring system further comprises a second video camera arranged to observe the protected interior space behind the closure, the controller being configured to enable the remote monitoring center to use the second video camera to observe any visitor within the protected interior space.

Although use of a doorbell video camera for the purpose of observing the visitor, and the doorbell audio interface as a means to speak with a visitor at the door are preferred, it will be appreciated that the actuator, the external video source, and the external audio interface may all be provided in free-standing components to implement embodiments of the invention. Thus, although it is preferred for the first video camera, if used, to be the video camera of a video doorbell, because of the generally ideal location of such a camera in terms of surveying the space in front of the front door 102, it is also possible to use a different video camera installation, such as that shown as 112, which also observes the space in front of the front door. Unlike most video doorbells, which typically do not show a view of the exterior face of the front door itself, a video camera installation such as that shown schematically in figures 1 and 2 as 112 may provide a view not only of the space in front of the front door, but also of the door. As previously described, the video camera installation 112 includes, or has an associated, presence and/or motion detector 114, such as a PIR or other thermal sensor, with the camera 112 typically only being turned on when the sensor detects movement and/or a presence within its field of view. It is also possible to make use of a different form of video camera installation, such as a surveillance camera installation. Typically, a surveillance camera installation does not require a movement/presence sensor, rather when the surveillance camera is activated it may continuously monitor the area under surveillance, typically streaming images continuously or every few seconds to a monitoring location. Such a surveillance camera may also operate under the control of a security monitoring system according to an aspect of the invention, the controller 208 of the security monitoring system transmitting a signal to cause the surveillance camera to capture images and transmit the captured images to the controller 208, and to forward the captured images for checking remotely, e.g., at the central monitoring station 210 or at a user device 220.

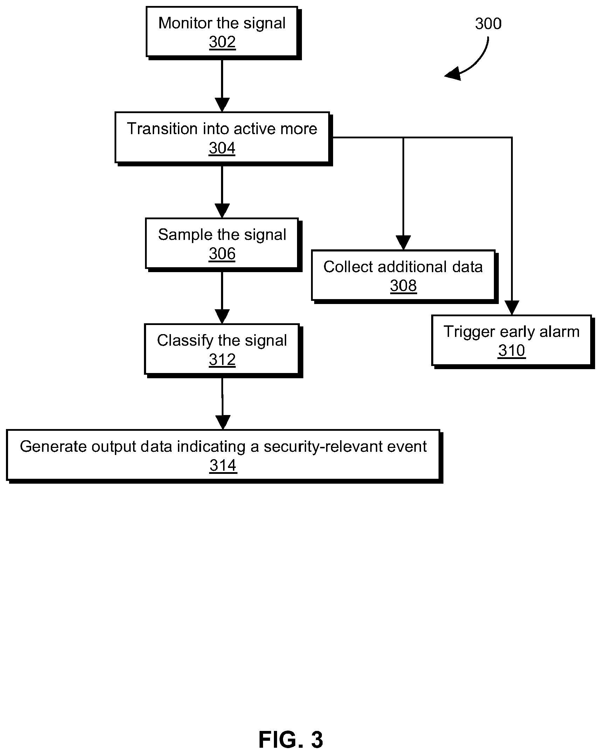

A method 300 according to aspects of the invention will now be described with reference to Figure 3. The method may be usable in a security monitoring system according to aspects described above and elsewhere in the present disclosure.

In step 302, the signal measured by the presence and/or movement detector 114 is monitored. In the illustrated embodiment, the detector 114 is a PIR sensor, and thus the signal is a time-dependent infrared signal. The signal is continuously measured by the sensor 114, i.e., in real-time or nearly in real-time. At this point in time, just the sensor 114 is active while the rest of the device is in a sleep-mode.

When the signal measured by the sensor 114 reaches or exceeds a predetermined threshold, it wakes up the device, in particular its processing circuitry, and thus initiates a transition into an active mode in step 304 (which may be an at least partially active mode, depending on whether other functional modules may be woken from a low-power or dormant state in subsequent steps). The threshold may be set as required by the circumstances. In the illustrated embodiment, the threshold is -30/30, which is an indicator for the signal strength of the measured signal.

After entering the active mode, the method samples the signal in step 306 for 10 seconds (note that another sampling duration may be used depending on the circumstances). The sampling is done with a predetermined sampling rate, examples of which will be provided further below.

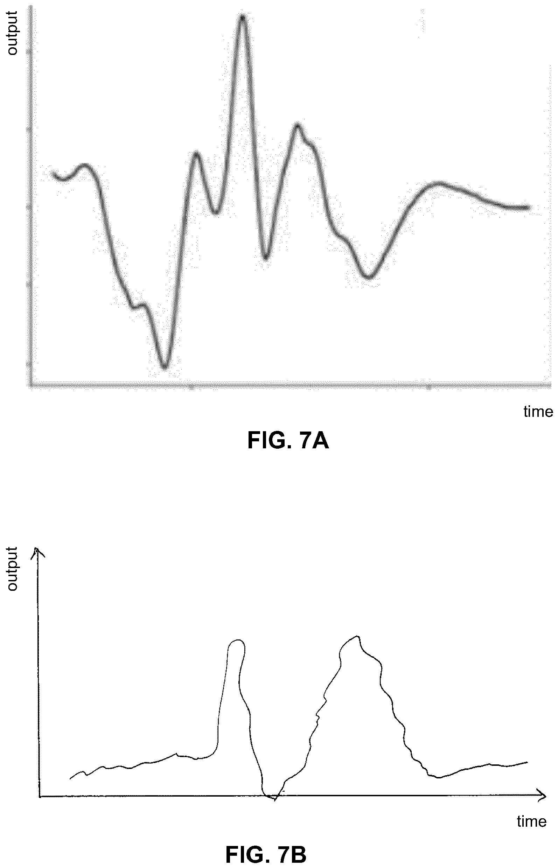

This way, an input vector for the machine-learning model is generated. In the illustrated embodiment, a four-element PIR sensor 114 which produces a single-channel output signal was used. The four elements of the PIR sensor 114 are rotated by 45° such that the arrangement of the four elements resembles the shape of a diamond. Accordingly, a person crossing the detection zone created by the four elements will cross a first element which produces a positive signal amplitude, then a second element which produces a negative signal amplitude, and then a third element which produces a positive amplitude, before leaving the detection zone. An example of a corresponding fluctuation of the signal over time is shown in the time-domain graph of Figure 7A.

Because the PIR sensor 114 in the illustrated embodiment produces a single-channel output signal, the input vector for the machine-learning model is a one-dimensional vector comprising the sampled values one after the other.

In an implementation variant, however, a multi-channel approach may be taken. Accordingly, two elements of the sensor 114 may produce a first output channel and the other two elements may produce another output channel. This would create a two-dimensional input to the machine-learning model (similar to a stereo signal). The two channels could be focused on different detection areas, e.g., floor-level and higher-level.

Referring back to Figure 3, the data in the input vector is classified in step 312. The classification is performed by the machine-learning model already mentioned, which is a CNN in the illustrated embodiment. The CNN outputs a classification result in the form of a probability in the form of a value between 0 and 1. The classification result thus represents a likelihood that a security-relevant event has occurred. In other words, the classification result indicates a correspondence of the input data with a security-relevant event.

In step 314, output data is generated based at least in part on the classification result. This step may be performed by the machine-learning model or a connected functional module. The output data is the result of a comparison of the classification result with a predetermined sensitivity level threshold, which is 0.6 in the illustrated embodiment (although other values may be selected depending on the circumstances). Accordingly, then the likelihood that the input data corresponds to a security-relevant event is 60 % or higher, the output data indicates that a security-relevant event was detected. Otherwise, the output data indicates that no security-relevant event was detected. Accordingly, the output data is in the illustrated embodiment a binary output signal which finally indicates whether a security-relevant event was detected or not.

After entering the active mode, i.e., in response to the transition in step 304, additional processes may be optionally initiated. One such optional process is a photo trigger. Accordingly, the method may collect additional data in step 308, e.g., a photograph. This allows a quicker or even real-time or quasi real-time analysis of the situation while the sampling step 306 is still in progress.

Another such optional process is an early alarm trigger, as shown in step 310, by referring to rules-based processing of the signal from the sensor. Accordingly, if the signal measured by the sensor 114 is very high (the threshold may depend on the operating mode of the device; see further below) and has made two pulses (or a predetermined number of pulses), an early alarm may be triggered although the sampling step 306 is still in progress and the classification step 312 might not even have started.

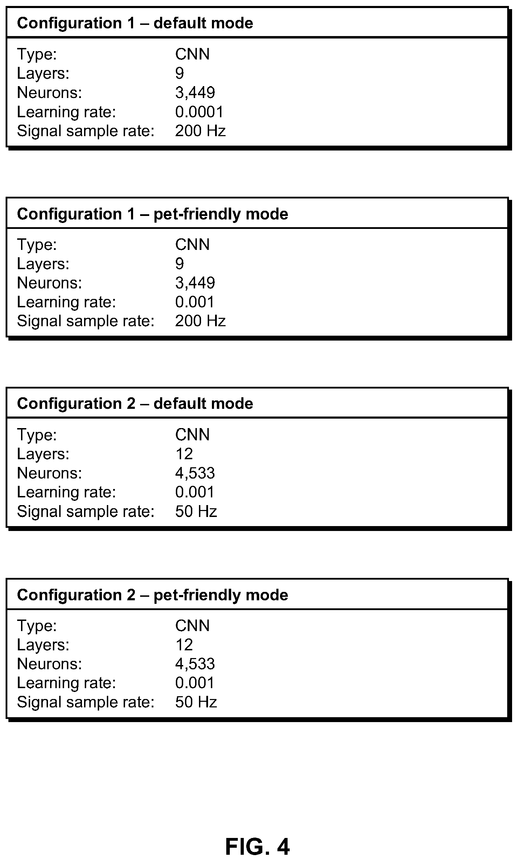

Figure 4 shows hyperparameters of two exemplary configurations of the machine-learning model labelled "configuration 1" and "configuration 2". In both configurations, the machine-learning model is a CNN. The CNN has 9 layers and 3,449 neurons in configuration 1 and 12 layers and 4,533 neurons in configuration 2.

Both configurations are provided in two modes, namely a default mode and a pet-friendly mode. In configuration 1, the default mode involves a learning rate of 0.0001, while the learning rate is 0.001 in the pet-friendly mode. In configuration 2, the learning rate is set to 0.001 in both the default mode and the pet-friendly mode.

The two configurations also differ in the signal sample rate, i.e., the frequency with which the signal is sampled in step 306 of Figure 3. The sample rate is 200 Hz in configuration 1 and 50 Hz in configuration 2. The inventors have realized that a sampling rate of 50 Hz is particularly practical because it provides a sufficiently feature-rich configuration that still works reasonably well.

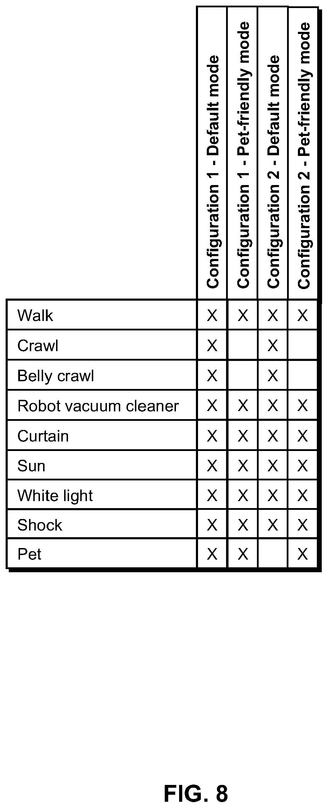

Figure 8 gives an overview of training datasets used in one example to train the configurations shown in Figure 4. As can be seen, configuration 1 in the default mode was trained with a training dataset comprising training data relating to the following events: walk, crawl, belly crawl, robot vacuum cleaner, curtain, sub, white light, shock, pet. Configuration 1 in the pet-friendly mode was trained with a training dataset comprising training data relating to the following events: walk, robot vacuum cleaner, curtain, sub, white light, shock, pet. Configuration 2 in the default mode was trained with a training dataset comprising training data relating to the following events: walk, crawl, belly crawl, robot vacuum cleaner, curtain, sub, white light, shock. Configuration 2 in the pet-friendly mode was trained with a training dataset comprising training data relating to the following events: walk, robot vacuum cleaner, curtain, sub, white light, shock, pet. An exemplary machine-learning model according to configuration 1 was trained with a training dataset of size 4,000, while an exemplary machine-learning model according to configuration 2 was trained with a training dataset of size 12,000.

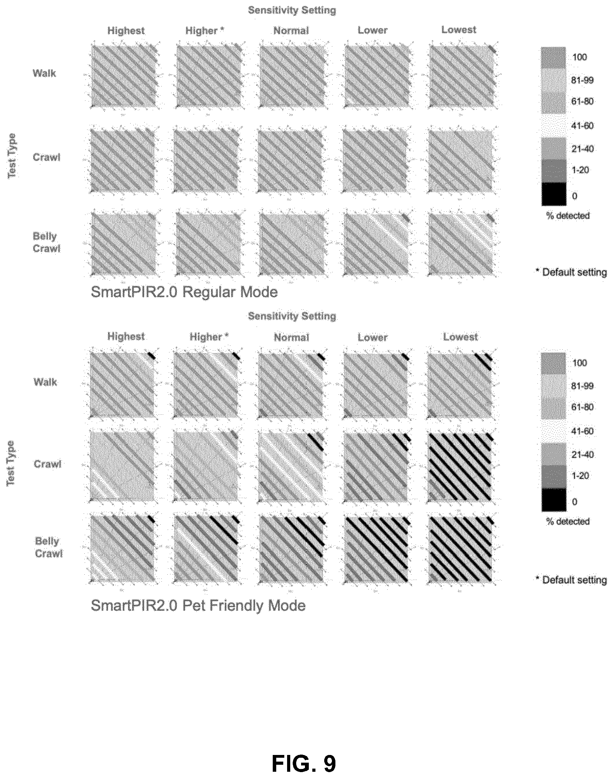

Figure 9 shows exemplary test results of a practical implementation of the above-explained concepts (labelled "SmartPIR 2.0"). The results also illustrate how conflicting requirements (pet friendly vs. belly crawl) are impacting results of the detection, if enabled.

In a practical implementation of the above concepts, a device hosting the above functionality may comprise two machine-learning models (one for the default mode and another one for the pet-friendly mode) according to either one of configuration 1 or 2. The device may have an interface element, such as a button or switch, to allow a user to select between the default mode and the pet friendly mode as desired, which will then enable the corresponding machine-learning model and disable the other machine-learning model. Of course, other modes, or different numbers of modes may be provided.

As already mentioned, the sensor 114 is a PIR sensor in the embodiment explained above. All objects with a temperature above absolute zero emit heat energy in the form of electromagnetic radiation. Usually, this radiation invisible to the human eye because it radiates at infrared wavelengths, but it can be detected by electronic devices designed for such a purpose. A passive infrared sensor (PIR sensor) is an electronic sensor that measures infrared light radiating from objects in its field of view. PIR sensors detect general movement, but typically do not give information on who or what has moved. As such, PIR sensors are passive components that can detect movement by detecting a change in IR radiation. They do this by having two or more (piezoelectric) materials with opposite polarity that change output voltage when heated. The overall voltage output is measured to identify target detection.

An exemplary PIR sensor is the Excelitas PYQ1548, which has a power consumption of 0.005 mW, a 140-180° FoV and a 6+ m detection range.

A lens (e.g., Fresnel lens) or mirror may be used to decide from where to "collect energy" to the sensor. The Fresnel lens (typically in the form of a plastic molded part) is relatively cheap and simple to produce but may have limitations on what is picked up by the PIR sensor. Thus, "zones" (as already mentioned further above) are typically created by the plastic mold, such that the PIR sensor will not pick up energy over the entire detection area.

Advantages of a PIR sensor may be that is it a comparatively simple device, it produces a relatively simple time-based signal, vast knowledge about the technology is available among practitioners, it has a large field of view (FoV) and operates on low power. Less advantageous factors may be that the output signal is temperature dependent and that it cannot detect range, angle, speed or object-type.

Although a PIR sensor 114 is mentioned in the embodiments shown above, other types of sensors might be used. For example, Figure 7B shows an exemplary signal produced by a TMOS sensor 114 which may be used as the basis for creating the input to the machine-learning model.

A TMOS sensor is based on the concept of "Silicon on Insulator" and/or "Complementary Metal Oxide Semiconductor" (SOI-CMOS) technology. This technology uses both n-type and p-type transistors to achieve fast and accurate switching and ultra-low power dissipation. It can be configured to perform a variety of logic operations. Advantages of a TMOS sensor may be the detection of up to 6 m for human-sized objects without additional optics (even 12 m with additional optics), that it senses absolute temperature, that it can differentiate between stationary and moving objects and that it is relatively white-light insensitive. Less advantageous factors may be that it is a comparatively new technology with many commercially available sensors being in "evaluation state", that it has a lower HFoV/VFoV, that it may have similar issues with sunlight and reflections as a PIR sensor and that only a limited group of vendors are presently available.

An exemplary TMOS sensor is the STMicroelectronics STHS34PF80, which has a 6 m detection range without optics (12 m with optics), an 80° HFoV and an 80° VFoV, I2C or SPI communication, a power consumption of 0.04 mW and a -40°C to 85°C temperature range.

The above explanation of aspects of the invention illustrates that the detection of security-relevant events is not only about the sensor, as one might expect. Rather, detection is a complex system based on factors such as the environment, input data, algorithms and decisions. Only when the (for the product or use case) correct sensor is used with a suitable algorithm with a suitable training set and in conjunction with the rest of the system, a high quality customer experience is ensured.

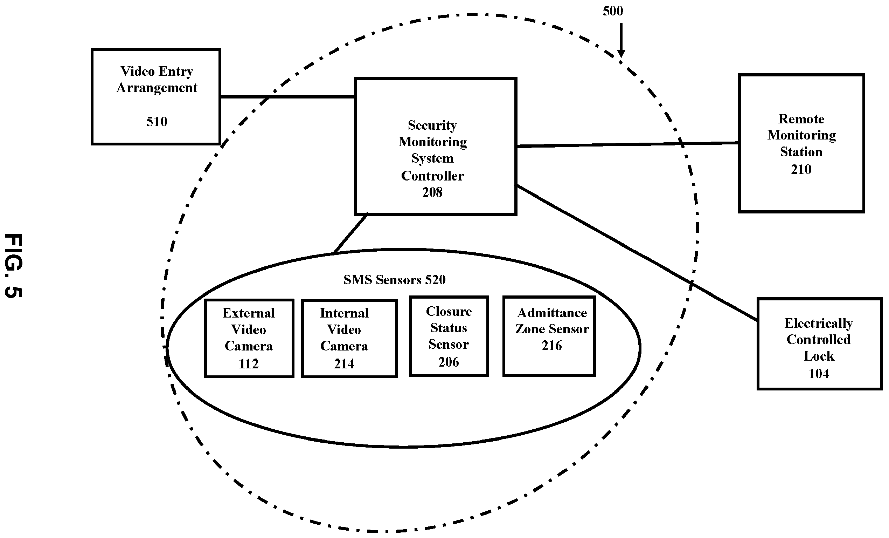

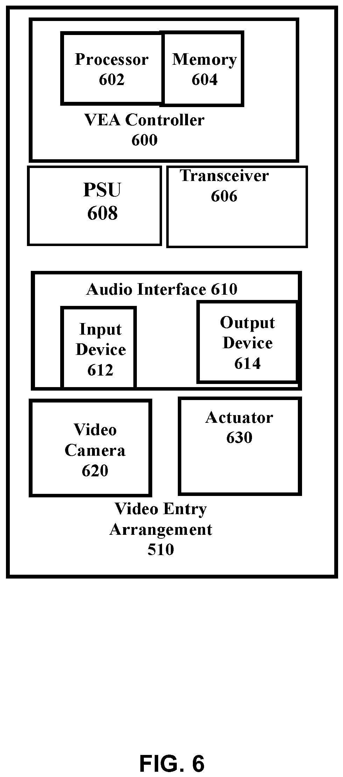

Alternative embodiments will now be described with reference to figures 5 and 6. Figure 5 shows schematically an architecture in which a security monitoring system, shown generally as 500, is coupled to a video entry arrangement 510, an electrically controlled lock, such as the lock 104 of figures 1 to 4, and a remote monitoring station 210. The security monitoring system 500 includes a security monitoring system controller 208, together with a collection of various sensors 520, including an external video camera 112, an internal video camera 214, a closure status sensor 206 for the closure (e.g. door 102) which is locked by electrically controlled lock 104, and an admittance zone sensor 216 - an example of which is the motion sensor 216 shown in figure 2, but more generally this is a sensor of any form to detect presence within a zone to which a visitor such as a delivery person, or the like, may be admitted.

Figure 6 is a schematic block diagram of a video entry arrangement 510, such as that shown in figure 5. Conveniently, the video entry arrangement 510 may take the form of a video doorbell. The video entry arrangement 510 includes a video entry arrangement controller, 600, including a processor 602, and a memory 604, which controls operation of the video entry arrangement - if necessary in association with the central unit 208 (if present) and/or the central monitoring station 210 if present and contactable. An RF transceiver 606 is provided for communication with the central unit 208 (if present), and/or the central monitoring station 210, and optionally with other nodes of the security monitoring system (for example an electronic door lock if fitted). The video entry arrangement 510 also preferably includes a power supply unit which may be mains powered, or D.C. powered from an external source (which itself may be mains powered), and which preferably includes at least battery backup but may be only battery powered. Also provided are an audio interface 610, preferably comprising both an input device 612, and an output device 614, a video camera, 620, and an actuator, or bell push, 630, all of which are operatively coupled to the controller 600.

Although some aspects have been described in the context of an apparatus, these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the invention may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor to perform one of the methods described herein. Generally, the methods are preferably performed by any hardware apparatus.

## Claims

1. A method in a security monitoring system to secure at least part of a perimeter of a premises (100), comprising:
classifying (312) input data by a machine-learning model comprising a convolutional neural network (CNN) to produce a classification result, wherein the input data is based at least in part on a time-dependent infrared signal measured by a presence and/or movement detector (114, 216), wherein the classification result indicates a correspondence of the input data with a security-relevant event; and
generating (314) output data based at least in part on the classification result, wherein the output data indicates whether a security-relevant event was detected.

2. The method of claim 1, comprising the further step of sampling (306) the time-dependent infrared signal to produce a sequence of data values from an analog signal;
wherein the input data comprises the sequence of data values.

3. The method of claim 2, wherein the sampling step (306) is performed for a predetermined sampling duration, optionally approximately 10 seconds.

4. The method of claim 2 or 3, wherein the sampling step (306) is performed with a predetermined sampling rate, optionally approximately 50 Hz.

5. The method of claim 2, 3 or 4, wherein the data values are one-dimensional data values and wherein each data value indicates a signal strength of the time-dependent infrared signal at a sampling point.

6. The method of any one of the preceding claims, wherein the input data comprises data representing: (i) a single channel of infrared signal data; or (ii) multiple channels of infra-red signal data, optionally two channels.

7. The method of any one of the preceding claims, wherein, during the classifying (312), the machine-learning model considers at least in part one or more of the following characteristics:
- a signal strength of the infrared signal;
- a smoothness of the infrared signal;
- a number of peaks of the infrared signal;
- a regularity of peaks of the infrared signal.

8. The method of any one of the preceding claims, wherein the classification result indicates a probability that the input data corresponds to a security-relevant event;
wherein the output data comprises or consists of a binary signal, thereby indicating whether a security-relevant event was detected or not;
wherein the value of the binary signal depends on whether the probability reaches or exceeds a sensitivity threshold;
wherein the sensitivity threshold is optionally approximately 60 %.

9. The method of any one of the preceding claims, wherein the machine-learning model has been trained to consider the presence of a human in the detection range of the presence and/or movement detector (114, 216) to be a security-relevant event and to consider the presence of a non-human, in particular an animal, in the detection range of the presence and/or movement detector (114, 216) not to be a security-relevant event.

10. The method of any one of the preceding claims, wherein the machine-learning model has been trained using training data comprising a plurality of measurements of the time-dependent infrared signal, or samples thereof, and associated labels which indicate whether the respective measurement or sample is associated with a security-relevant event;
wherein, optionally, the plurality of measurements of the time-dependent infrared signal, or the samples thereof, have been recorded when one of the following objects was present in the detection range of a presence and/or movement detector:
- a walking human;
- a crawling human;
- a belly-crawling human;
- a robot vacuum cleaner or other automatic household appliance;
- a curtain or other movable furniture;
- sunlight;
- white light;
- shock
- an animal, in particular a pet.

11. The method of any one of the preceding claims, wherein the machine-learning model is a first machine-learning model associated with a first operational mode and wherein the system comprises a second machine-learning model, in particular a second CNN, associated with a second operational mode;
wherein the first and second machine-learning models have been trained on different sets of training data and/or have different hyperparameters;
wherein the system comprises means for receiving a user-selection indicating an operating mode of the system;
optionally wherein the first operating mode is a default mode and the second operating mode is a pet-friendly mode.

12. The method of any one of the preceding claims, wherein the presence and/or movement detector (114, 216) is or comprises at least one infrared sensor, the infrared sensor optionally comprising one or more of:
a passive sensor;
a passive infrared (PIR) sensor;
a thermal-MOS (TMOS) sensor.

13. The method of any one of the preceding claims, wherein the output data comprises, or is the basis for, a control signal, wherein the control signal is configured for one or more of:
- controlling a technical system, device and/or process;
- waking a functional module from a dormant mode;
- activating a security device, in particular a range detector and/or a camera and/or a microphone, of the security monitoring system;
- causing an alarm device to issue an alarm;
- causing a display device to display the classification result.

14. The method of any one of the preceding claims, wherein the machine-learning model is implemented on a processing circuitry, wherein a default operating mode of the processing circuitry is a power-saving mode;
wherein the method comprises the further steps of:
monitoring (302) the time-dependent infrared signal, preferably continuously while it is measured by the presence and/or movement detector (114, 216); and
transitioning (304) the processing circuitry into an active mode in response to the monitoring;
wherein the sampling step (306) and/or the classifying step (312) is performed only when the processing circuitry is in the active mode.

15. The method of any one of the preceding claims, comprising one or more of the following further steps, which are optionally performed in response to the transitioning step (304) recited in claim 14 and/or in parallel to the sampling step (306) recited in claim 2:
- collecting (308) additional data, in particular a photo, a video and/or audio data;
- triggering (310) an alarm device to issue an alarm.
- processing the input signal using rules-based processing distinct from the machine-learning model, and wherein the step of generating (314) the output data is based additionally in part on the result of the rules-based processing, optionally wherein the rules-based processing is based on a number of pulses in the infrared signal and/or a frequency of pulses in the infrared signal and/or a magnitude of signal value variation in the infrared signal.

16. A security monitoring system, a presence and/or movement detector (114, 216), or a data processing apparatus for a security monitoring system, comprising means for carrying out the method of any one of claims 1-15.

17. A computer program or a computer-readable medium having a computer program stored thereon, the computer program comprising instructions which, when the program is executed by a computer, cause the computer to carry out the method of any one of claims 1-15.

18. A data structure embodying a machine-learning model for use in the method of any one of claims 1-15.
